# EUROPÄISCHE PATENTSCHRIFT

(11) **EP 1 655 177 B1**
(45) Veröffentlichungstag und Bekanntmachung des Hinweises auf die Patenterteilung: **25.07.2007**
(21) Anmeldenummer: 05021550.8
(22) Anmeldetag: 01.10.2005
(51) Int. Cl.: B60R 11/02

(54) **Befestigungsvorrichtung für einen Monitor an einem Fahrzeugsitz**
Device for mounting a display monitor to a vehicle seat
Dispositif pour fixer un écran à un siège d'un véhicule

(30) Priorität: 05.11.2004 DE 102004053452
(43) Veröffentlichungstag der Anmeldung: 10.05.2006
(73) Patentinhaber: Dr. Ing. h.c. F. Porsche Aktiengesellschaft, 70435 Stuttgart (DE)
(72) Erfinder: Stadler, Bernd, 71735 Eberdingen (DE); Schmierer, Wolfgang, 75173 Pforzheim (DE)

(56) Entgegenhaltungen:
- DE-U1-5202004 008 20
- DE-U1-4202004 008 94
- US-B1- 6 418 010
- PATENT ABSTRACTS OF JAPAN Bd. 2002, Nr. 06, 4. Juni 2002 (2002-06-04) & JP 2002 036968 A (KENWOOD CORP), 6. Februar 2002 (2002-02-06)

## Beschreibung

Die Erfindung bezieht sich auf eine Befestigungsvorrichtung für einen Monitor an einem Fahrzeugsitz nach dem Oberbegriff des Anspruchs 1. Eine deratige Befestigungsvorrichtung ist aus der DE 202004008205 U1 bekannt.

Aus der DE 199 43 696 A1 ist eine Befestigungskonsole für ein Bildschirmgerät im Fond eines Kraftfahrzeugs an einem Fahrzeugsitz bekannt geworden, die ein Klemmelement umfasst, welches Kopfstützhalter umgreift und an diesen festsetzbar ist. Mit dem Klemmelement ist eine Platte verbunden, auf der über einen Bildschirmständer das Bildschirmgerät gehalten wird.

Aufgabe der Erfindung ist es, eine verbesserte Befestigungsvorrichtung für einen Monitor an einem Fahrzeugsitz zu schaffen, über die in einfacher Weise der Monitor betriebssicher an der Rückenlehne des Vordersitzes befestigbar ist.

Diese Aufgabe wird erfindungsgemäß durch die kennzeichnenden Merkmale des Patentanspruchs 1 gelöst. Weitere vorteilhafte Merkmale beinhalten die Unteransprüche.

Die mit der Erfindung hauptsächlich erzielten Vorteile bestehen darin, dass der Monitor über zwei zueinander beabstandete Befestigungen an der Sitzlehne gehalten wird und somit eine stabile Lagerung am Vordersitz herstellbar ist. Der Monitor ist mit einer aufrecht am Sitz angeordneten Halteplatte verbunden, die einerseits eine Abstützkonsole zur Sitzlehne und andererseits ein Befestigungsteil umfasst, das mit einem Rahmenstrukturteil der Sitzlehne verbindbar ist. Die Verbindung der Halteplatte mit der Sitzlehne über die Abstützkonsole sowie über das Rahmenstrukturteil ergibt eine Befestigung an stabilen Teilen des Sitzes und ermöglicht eine feste Positionierung des Monitors am Vordersitz.

Insbesondere ist die Abstützkonsole der Halteplatte als abgestellter Schenkel ausgebildet, die Rastausnehmungen zur Umfassung von Haltestangen einer Sitzkopfstütze aufweist und der abgestellte Schenkel liegt flächig auf einer stirnseitigen Sitzlehnenfläche abstützend auf. Durch diese Verbindung mit den Haltestangen der Kopfstütze wird erreicht, dass die Halteplatte für den Monitor in Querrichtung zusätzlich fixierbar ist.

Die Verbindung der Halteplatte des Weiteren mit dem Rahmen der Sitzlehne bzw. der Rahmenstruktur mittels einer mit der Halteplatte verbundenen Winkelelements, das einen abgestellten Halteschenkel aufweist, wird erreicht, dass eine Befestigung am Rahmenstrukturteil möglich wird und der Schenkel in der Höhe beabstandet zum abgestellten Schenkel der Abstützkonsole anzuordnen ist. Diese weitere feste Verbindung mit der Rahmenstruktur der Sitzlehne gewährleistet eine zusätzliche feste Anbindung am Fahrzeugsitz.

Damit der Monitor für den Betrachter einstellbar ist, wird dieser über eine Schwenklagerung mit der Halteplatte verbunden, wobei zu beiden Seiten des Monitors Schwenklager vorgesehen sind und diese bilden eine horizontale Schwenkachse. Durch diese Schwenklagerung kann der Monitor in kleinen Winkelgraden zum Betrachter eingestellt werden.

Zur Verkleidung des an der Halteplatte festgelegten Monitors ist eine umfassende Abdeckschale vorgesehen, die über Schraubmittel an der Halteplatte befestigbar ist. Diese Abdeckschale weist einen inneren Rahmen sowie einen äußeren Rahmen auf, der zwischen seitlichen Rahmenteilen der Rahmen Dome für Schraubmittel zur Befestigung mit der Halteplatte besitzt. Damit ein dichter Abschluss zwischen Sitzlehne bzw. stirnseitiger Sitzlehnenfläche und Abdeckschale sichergestellt wird, ist der äußere und innere Rahmen der Lehnenkontur derart angepasst, dass ein zur Lehnenkontur korrespondierender Kantenverlauf gewährleistet ist.

Ein Ausführungsbeispiel der Erfindung ist in den Zeichnungen dargestellt und wird im Folgenden näher beschrieben.

### Es zeigen

- Fig. 1: eine schaubildliche Darstellung einer Halteplatte für einen Monitor mit Abstützkonsole, Befestigungsteilen und Abdeckschale,

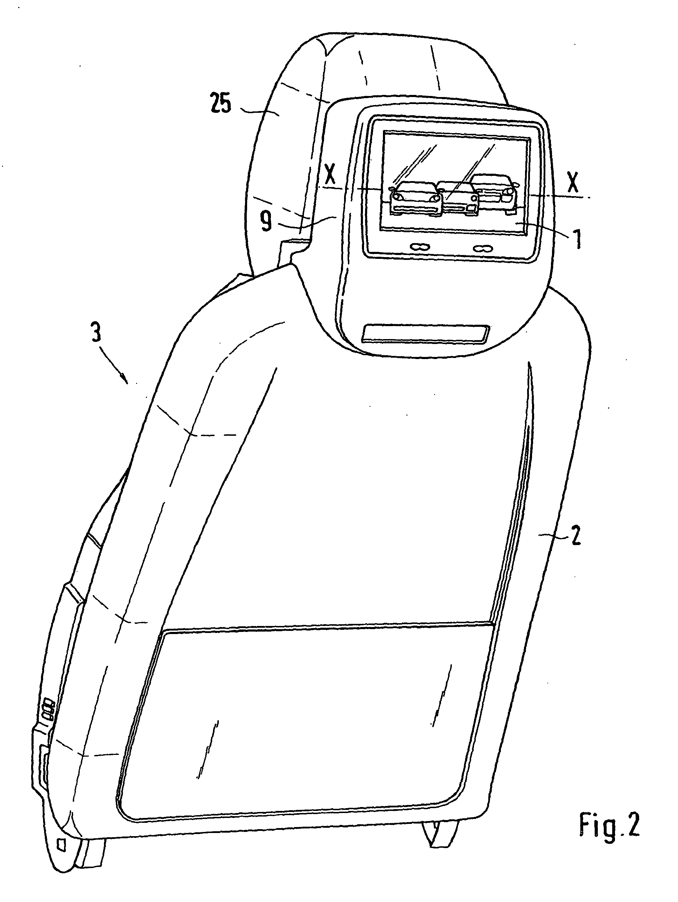

- Fig. 2: eine schaubildliche Darstellung des montierten Monitors am Vordersitz,

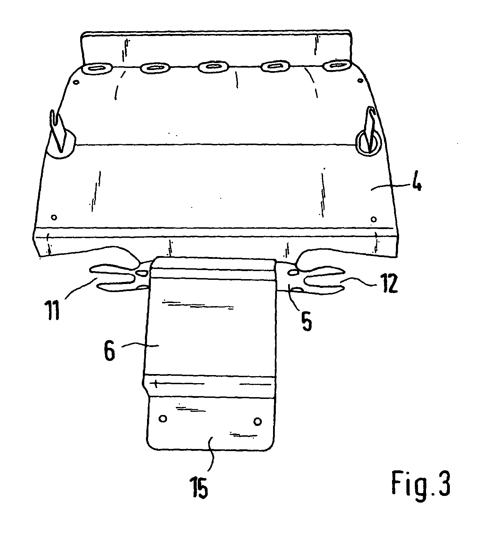

- Fig. 3: eine schaubildliche Darstellung der Halteplatte,

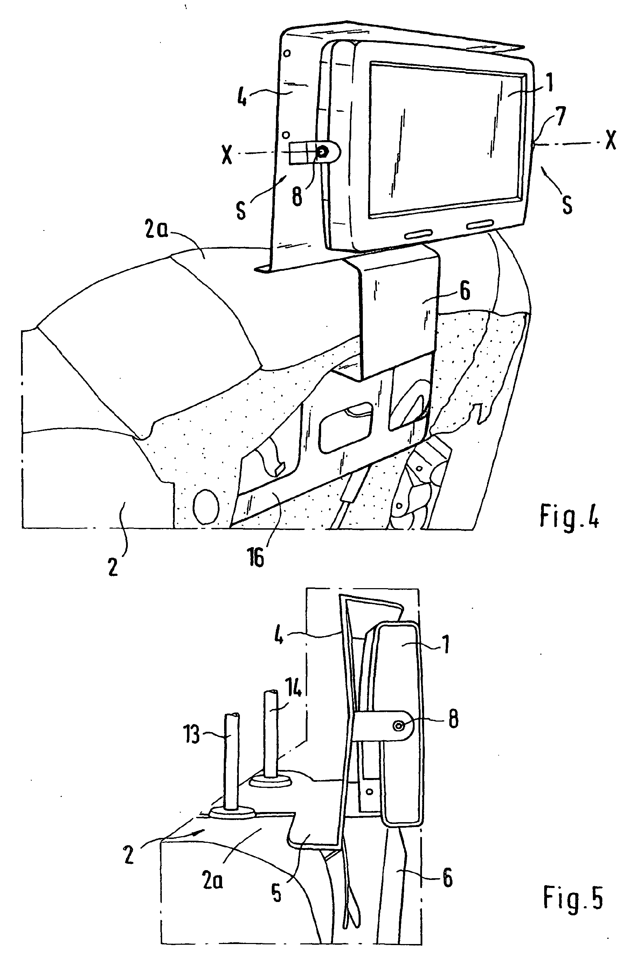

- Fig. 4: eine schaubildliche Darstellung der an der Vordersitzlehne befestigten Halteplatte,
- Fig. 5: eine schaubildliche Darstellung der an den Haltestangen der Kopfstütze befestigten Halteplatte,

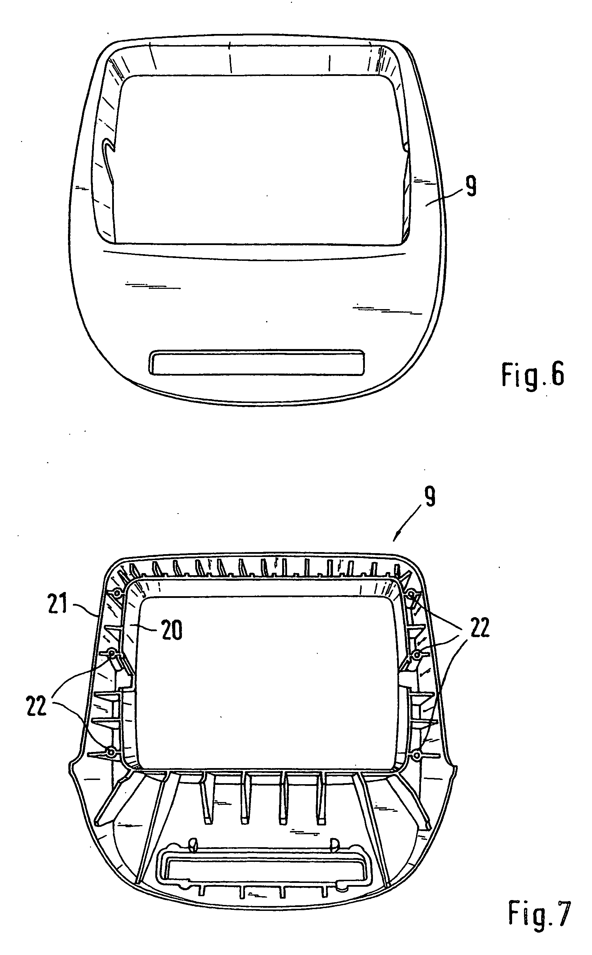

- Fig. 6: eine Vorderansicht auf die Abdeckschale und
- Fig. 7: eine Rückansicht auf die Abdeckschale.

Die Befestigungsvorrichtung für einen Monitor 1 an einer Sitzlehne 2 eines Sitzes 3 eines Kraftfahrzeugs umfasst eine Halteplatte 4, welche eine Abstützkonsole 5 und ein Befestigungsteil 6 aufweist. Mit der Halteplatte 4 ist über eine Schwenklagerung S mit Schwenklagern 7, 8 ein Monitor 1 schwenkbeweglich gehalten. Eine übergesetzte Abdeckschale 9 umgibt den Monitor 9 randseitig mit samt der Halteplatte 4.

Die Abstützkonsole 5 ist vorzugsweise einstückig mit der Halteplatte 4 ausgeführt und erstreckt sich als abgestellter Schenkel 10 etwa rechtwinkelig zur Halteplatte 4 und weist in den Seitenkanten Rastausnehmungen 11, 12 auf. Diese umgreifen rastend Haltestangen 13, 14 einer Sitzkopfstütze 25, wobei sich der Schenkel 10 auf der Sitzlehnenfläche 2a flächig abstützt.

Das Befestigungsteil 6 besteht aus einem an der Halteplatte 4 bzw. an dem abgestellten Schenkel 10 befestigten Winkelelement und weist einen abgestellten Halteschenkel 15 auf, welcher über Befestigungsmittel mit einem Rahmenstrukturteil 16 der Sitzlehne 2 fest verbunden ist.

Die Schwenklager 7, 8 an der Halteplatte 4 für den Monitor 1 sind zu beiden Seiten des Monitors vorgesehen und bilden eine horizontale Schwenkachse X-X. Um diese Schwenkachse X-X kann der Monitor 1 um wenige Winkelgrade beispielsweise von 5 bis 10 Grad in beiden Richtungen verschwenkt werden.

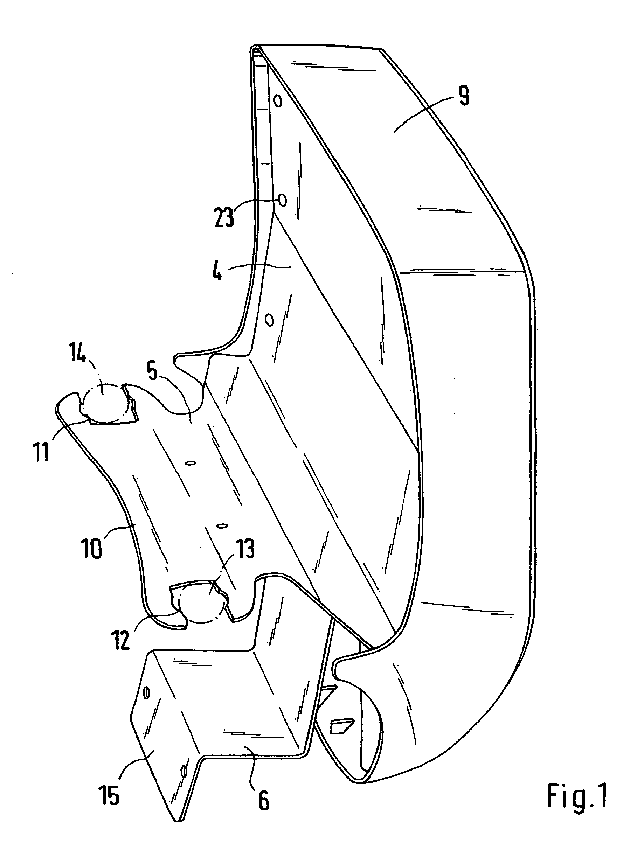

Die Halteplatte 4 sowie der Monitor 1 sind von einer Abdeckschale 9 umgeben, die formgenau mit der Außenfläche der Rückenlehne bzw. der stirnseitigen Sitzlehnenfläche 2a in korrespondierender Anlage abschließt. Diese Abdeckschale 9 umfasst im Wesentlichen einen inneren Rahmen 20 und einen äußeren Rahmen 21 zwischen denen seitlich Dome 22 angeformt sind, die zur Befestigung mit der Halteplatte 4 dienen. Die entsprechenden Schraubmittel 23 sind in Fig. 1 näher dargestellt.

## Patentansprüche

1. Befestigungsvorrichtung für einen Monitor an einem Fahrzeugsitz, insbesondere an einem Vordersitz eines Kraftfahrzeugs, wobei die Vorrichtung mit einer Sitzlehne verbunden ist, wobei der Monitor (1) mit einer aufrecht am Sitz (3) angeordneten Halteplatte (4) verbunden ist, die eine Abstützkonsole (5) zur Sitzlehne (2) umfasst, **dadurch gekennzeichnet, dass** die Halteplatte (4) außerdem ein Befestigungsteil (6) umfasst, das mit einem Rahmenstrukturteil (16) der Sitzlehne (2) verbindbar ist.

2. Befestigungsvorrichtung nach Anspruch 1, **dadurch gekennzeichnet, dass** die Abstützkonsole (5) der Halteplatte (4) aus einem abgestellten Schenkel (10) besteht, der Rastausnehmungen (11, 12) zur Umfassung von Haltestangen (13, 14) einer Sitzkopfstütze (25) aufweist und der Schenkel (10) flächig auf einer stirnseitigen Sitzlehnenfläche (2a) abstützend aufliegt.

3. Befestigungsvorrichtung nach den Ansprüchen 1 oder 2, **dadurch gekennzeichnet, dass** das Befestigungsteil (6) aus einem Winkelelement mit einem abgestellten Halteschenkel (15) besteht, der am Rahmenstrukturteil (16) befestigt ist und der Halte-Schenkel (15) in der Höhe beabstandet zum abgestellten Schenkel (10) der Abstützkonsole (5) angeordnet ist.

4. Befestigungsvorrichtung nach den Ansprüchen 1, 2 oder 3, **dadurch gekennzeichnet, dass** der Monitor (1) über eine Schwenklagerung (5) mit der Halteplatte (4) verbunden ist, die zu beiden Seiten des Monitors (1) vorgesehen ist und die einzelnen Schwenklager (7, 8) eine horizontale Schwenkachse (X-X) bilden.

5. Befestigungsvorrichtung nach den Ansprüchen 1, 2, 3 oder 4, **dadurch gekennzeichnet, dass** die Halteplatte (4) mit einer den Monitor (1) umfassenden Abdeckschale (9) verbunden ist, die über Schraubmittel (23) an der Halteplatte (4) befestigbar ist.

6. Befestigungsvorrichtung nach einem der vorhergehenden Ansprüche, **dadurch gekennzeichnet, dass** die Abdeckschale (9) einen inneren Rahmen (20) und einen äußeren Rahmen (21) umfasst, wobei zwischen den seitlichen Rahmenteilen der Rahmen (20, 21) Dome (22) für die Schraubmittel (23) vorgesehen sind.

7. Befestigungsvorrichtung nach Anspruch 6, **dadurch gekennzeichnet, dass** der äußere und innere Rahmen (20, 21) der Abdeckschale (9) einen mit der Lehnenkontur im Bereich der stirnseitigen Sitzlehnenfläche (2a) korrespondierenden Kantenverlauf aufweist und die Abdeckschale (9) mit der Halteplatte (4) in etwa abschließt.

## Claims

1. A device for mounting a monitor on a vehicle seat, especially on a front seat of a motor vehicle, wherein the device is connected to a seat back, wherein the monitor (1) is connected to a holding plate (4) arranged upright on the seat (3) and comprising a supporting bracket (5) for the seat back (2), **characterised in that** the holding plate (4) also comprises a mounting part (6) which is connectable to a structural frame part (16) of the seat back (2).

2. A mounting device according to claim 1, **characterised in that** the supporting bracket (5) of the holding plate (4) consists of a bent arm (10) which has locking recesses (11, 12) for surrounding holding rods (13, 14) of a head restraint (25) of the seat, and the arm (10) lies flat against a seat-back end surface (2a) in a supporting manner.

3. A mounting device according to claim 1 or claim 2, **characterised in that** the mounting part (6) consists of an angled member with a bent holding arm (15) which is fixed to the structural frame part (16), and the holding arm (15) is arranged with vertical spacing from the bent arm (10) of the supporting bracket (5).

4. A mounting device according to claims 1, 2 or 3, **characterised in that** the monitor (1) is connected to the holding plate (4) by a pivoted bearing arrangement (5) provided on both sides of the monitor (1), and the individual pivoted bearings (7, 8) form a horizontal pivoting axis (X-X).

5. A mounting device according to claims 1, 2, 3 or 4, **characterised in that** the holding plate (4) is connected to a covering shell (9) which surrounds the monitor (1) and is fixable to the holding plate (4) by screw means (23).

6. A mounting device according to any one of the preceding claims, **characterised in that** the covering shell (9) comprises an inner frame (20) and an outer frame (21), wherein domes (22) for the screw means (23) are provided between the lateral frame parts of the frames (20, 21).

7. A mounting device according to claim 6, **characterised in that** the outer and inner frames (20, 21) of the covering shell (9) have an edge shape corresponding to the contour of the seat back in the region of the seat-back end surface (2a), and the covering shell (9) is approximately aligned with the holding plate (4).

## Revendications

1. Dispositif de fixation d'un moniteur sur un siège de véhicule automobile, en particulier sur un siège avant d'un véhicule automobile, le dispositif étant raccordé à un dossier de siège, le moniteur (1) étant raccordé avec une plaque de fixation (4) disposée verticalement sur le siège (3) qui comporte une console d'appui (5) vers le dossier du siège (2), **caractérisé en ce que** la plaque de fixation (4) comprend, en outre, une partie de fixation (6) qui peut être raccordée à une partie de structure de cadre (16) du dossier de siège (2).

2. Dispositif de fixation selon la revendication 1, **caractérisé en ce que** la console d'appui (5) de la plaque de fixation (4) est constituée d'un montant adapté (10) qui comporte des évidements d'encliquetage (11, 12) pour enserrer des tiges de maintien (13, 14) d'un appui-tête de siège (25) et le montant (10) est posé en appui plan sur une surface du dossier de siège (2a) sur la face avant.

3. Dispositif de fixation selon la revendication 1 ou 2, **caractérisé en ce que** la partie de fixation (6) est constituée d'une cornière avec un montant de fixation adapté (15) qui est fixé à la partie de structure de cadre (16) et le montant de fixation (15) est placé à une certaine distance en hauteur par rapport au montant adapté (10) de la console d'appui (5).

4. Dispositif de fixation selon la revendication 1, 2 ou 3, **caractérisé en ce que** le moniteur (1) est raccordé à la plaque de fixation (4) à l'aide d'une articulation (5) qui est prévue des deux côtés de le moniteur (1) et les différents paliers articulés (7, 8) forment un axe de pivotement horizontal (X-X).

5. Dispositif de fixation selon la revendication 1, 2, 3 ou 4, **caractérisé en ce que** la plaque de fixation (4) est raccordée à une coquille de protection (9) renfermant le moniteur (1) qui peut être fixée à la plaque de fixation (4) à l'aide de moyens de vissage (23).

6. Dispositif de fixation selon l'une quelconque des revendications précédentes, **caractérisé en ce que** la coquille de protection (9) comprend un cadre intérieur (20) et un cadre extérieur (21), des dômes (22) étant prévus entre les parties de cadre latérales des cadres (20, 21) pour les moyens de vissage (23) .

7. Dispositif de fixation selon la revendication 6, **caractérisé en ce que** le cadre intérieur (20) et le cadre extérieur (21) de la coquille de protection (9) présentent un tracé de bord correspondant au contour du dossier dans la zone de la surface du dossier de siège (2a) sur la face avant et obturent approximativement la coquille de protection (9) avec la plaque de fixation (4).
